# EUROPÄISCHE PATENTSCHRIFT

(11) **EP 1 436 777 B1**
(45) Veröffentlichungstag und Bekanntmachung des Hinweises auf die Patenterteilung: **22.08.2007**
(21) Anmeldenummer: 02764483.0
(22) Anmeldetag: 15.10.2002
(51) Int. Cl.: G06K 19/077, B29C 45/14

(54) **VERFAHREN ZUR HERSTELLUNG EINES DATENTRÄGERS SOWIE NACH DIESEM VERFAHREN HERGESTELLTER DATENTRÄGER**
METHOD FOR PRODUCING A DATA CARRIER AND A DATA CARRIER PRODUCED ACCORDING TO SAID METHOD
PROCEDE DE PRODUCTION D'UN SUPPORT DE DONNEES ET SUPPORT DE DONNEES PRODUIT SELON CE PROCEDE

(30) Priorität: 18.10.2001 CH 191601
(43) Veröffentlichungstag der Anmeldung: 14.07.2004
(73) Patentinhaber: Trüb AG, CH-5001 Aarau (CH)
(72) Erfinder: CHRISTEN, Paul, CH-5000 Aarau (CH); HAHN, Roland, CH-4600 Olten (CH)
(74) Vertreter: Groner, Manfred
(86) Internationale Anmeldenummer: PCT/CH2002/000564
(87) Internationale Veröffentlichungsnummer: WO 2003/034333

(56) Entgegenhaltungen:
- WO-A-00/30031
- DE-A- 19 710 656
- DE-A- 19 848 712
- US-A- 5 164 144
- US-A- 5 894 006

## Beschreibung

Die Erfindung betrifft ein Verfahren zur Herstellung eines Datenträgers nach dem Oberbegriff des Anspruchs 1. Datenträger mit einem elektronischen Modul in der Form eines Chips sind beispielsweise als Bankkarten allgemein bekannt. An solche Datenträger wird die Anforderung gestellt, dass die Elektronik auch in einem rauen Umfeld einwandfrei funktioniert. Gleichzeitig soll ein solcher Datenträger kostengünstig in hohen Seriezahlen herstellbar sein.

Die Herstellung solcher Datenträger erfolgt beispielsweise durch Heisslaminieren von Folien, wobei das elektronische Modul zwischen zwei Folien einlaminiert wird. Das elektronische Modul, also beispielsweise ein Chip, ist dann zwischen zwei miteinander verbundenen Folien eingeschlossen und damit gegen chemische und mechanische Umwelteinflüsse geschützt. Sollen jedoch zwei oder mehr Chips oder ein grösseres elektronisches Modul einlaminiert werden, so wird das Laminierverfahren sehr schwierig oder sogar unmöglich.

Durch die DE 198 48 712 A ist die Verwendung von thermoplastischen Schmelzklebstoffen zur Herstellung von Komponentenschichten in Smart Cards bekannt geworden. Die Komponentenschichten werden in einer Vergussform mit einem Niederdruck-Spritzgussverfahren hergestellt, wobei ein Chip in die Vergussform eingesetzt und eingegossen wird. Die Komponentenschichten mit dem Chip werden jeweils mit einer Grund- und einer Deckfolie laminiert. Zur Fertigstellung der Smart Cards muss der auf die genannte weise hergestellte Körper in mehreren weiteren Schritten weiterverarbeitet und insbesondere mit Sicherheitsmerkmalen versehen werden. Hierbei entsteht ein vergleichsweise hoher Ausschuss. Bei den ausgeschiedenen Produkten ist nun jeweils der in die Komponentenschicht eingebettete Chip und gegebenenfalls eine Antenne verloren. Da bei einer hochwertigen Smart Card der Chip die weitaus teuerste Komponente ist, entstehen dadurch vergleichsweise hohe Kosten.

Durch die DE 197 10 656 A, gegen die die Ansprüche abgegrezt sind, ist eine Chipkarte und ein Verfahren zu deren Herstellung bekannt geworden. Bei diesem Verfahren wird zur Unterbringung des Chips aus einem Kernfolienrohling ein Bereich ausgestanzt. In den ausgestanzten Bereich wird ein verfestigbares Füllmittel eingebracht. Der Chip wird in das Füllmittel eingelegt und überschüssiges Füllmittel wird entfernt. Schliesslich wird laminiert und das Füllmittel verfestigt. Dieses Verfahren ist vergleichsweise aufwendig.

Durch die US 6 176 431 B1 ist ein Verfahren zur Herstellung eines Datenträgers bekannt geworden, bei dem in einer Pressform das elektronische Modul positioniert wird. Der Hohlraum, in dem das elektronische Modul positioniert ist, wird mit einem Kunststoffgranulat oder einem Kunststoffpulver aufgefüllt. Mit einem Pressstempel wird der eingefüllte Kunststoff erwärmt und damit der Kartenkörper gebildet. Das elektronische Modul ist in diesen Kartenkörper eingeschlossen.

Durch die EP 0 277 854 B1 ist ein Verfahren zur Herstellung eines Datenträgers bekannt geworden, bei dem das elektronische Modul in einer Ausnehmung eines Kartenkörpers positioniert und anschliessend im Spritzgiessverfahren mit einem thermoplastischen Kunststoff umgeben wird.

Erfindungsgemäss wird ein Verfahren gemäss Anspruch 1 vorgeschlagen.

Beim erfindungsgemässen Verfahren ist das elektronische Modul während der Herstellung wesentlich weniger belastet als bei einem Spritzgussverfahren oder einem Pressverfahren. Das elektronische Modul kann auch wesentlich grösser sein als ein üblicher Chip, und das Modul kann zudem elektronische Bauteile aufweisen, die höheren Temperaturen und Drücken, wie sie beim Spritzgussverfahren und beim Pressverfahren notwendig sind, nicht ausgesetzt werden können. Das Verfahren eignet sich insbesondere auch für Datenträger mit einem elektronischen Modul, das eine Leiterplatte aufweist, auf welcher elektronische Bauteile angeordnet sind. Die Bauteile und die Leiterplatte werden beim Einspritzen des dünnflüssigen thermoplastischen Kunststoffs schonend umspült. Der dünnflüssige thermoplastische Kunststoff härtet ohne chemische Reaktion aus und verbindet sich mit dem Kartenkörper. Eine Aktivierung zum Aushärten bzw. Nachhärten des Füllstoffs ist nicht erforderlich.

Ein besonders schonendes Verfahren ist dann gewährleistet, wenn gemäss einer Weiterbildung der Erfindung der thermoplastische Kunststoff im Schmelzgussverfahren in den freien Raum eingebracht wird. Die Temperatur des thermoplastischen Kunststoffs ist beim Einspritzen in den freien Hohlraum vorzugsweise niedriger als 300°, vorzugsweise niedriger als 250°. Nach einer Weiterbildung der Erfindung ist der thermoplastische Kunststoff so ausgebildet, dass er im Wesentlichen ohne chemische Reaktion aushärtet und hierbei eine dauerhafte chemische Verbindung zum elektronischen Modul und wenigstens einer Folie eingeht.

Das erfindungsgemässe Verfahren hat zudem den Vorteil, dass eine sehr rationelle Herstellung möglich ist.

Die Erfindung betrifft zudem einen nach diesem Verfahren hergestellten Datenträger.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
Fig. 1 schematisch die Herstellung eines erfindungsgemässen Datenträgers,
Fig. 2 schematisch ein Herstellungsverfahren nach einer Variante,
Fig. 3 schematisch einen Schnitt durch einen Datenträger, der nach dem Verfahren gemäss Fig. 1 hergestellt wurde,
Fig. 4 schematisch ein Schnitt durch einen Datenträger, der nach dem Verfahren gemäss Fig. 2 hergestellt wurde und
Fig. 5 schematisch ein Schnitt durch einen Bogen mit mehreren eingebetteten elektronischen Modulen.

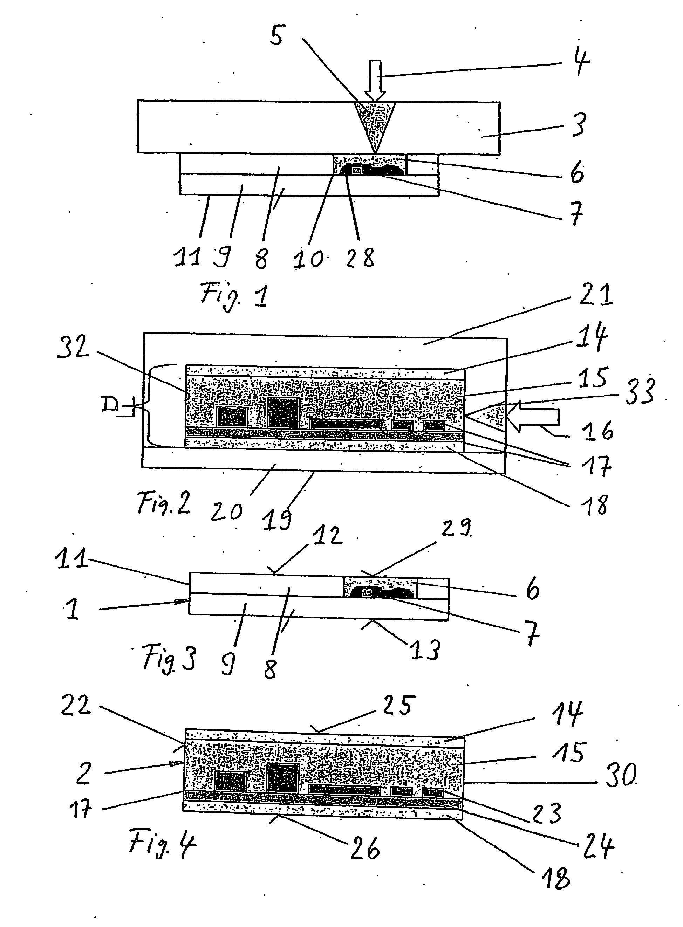

Die Fig. 1 zeigt einen Kartenkörper 11, der aus wenigstens zwei Folien 8 und 9 hergestellt ist. Diese beiden Folien 8 und 9 sind beispielsweise Folien aus Polycarbonat oder PVC und durch ein Laminierverfahren miteinander verbunden. In die obere Folie 8 ist eine Ausnehmung 10 ausgestanzt, die oben offen ist und sich über die gesamte Tiefe der Folie 8 erstreckt. In diese Ausnehmung 10 ist ein elektronisches Modul 7, beispielsweise ein Chip positioniert und beispielsweise mit einem Kleber 28 fixiert. Der noch verbleibende freie Raum der Ausnehmung 10 ist vollständig mit einem Füllstoff 6 ausgefüllt. Dieser Füllstoff 6, wird im Schmelzgussverfahren aus einem thermoplastischen Kunststoff hergestellt. Hierzu wird gemäss Fig. 1 an den Körper 11 eine plattenförmige Form 3, beispielsweise eine Aluminiumform angelegt. In dieser Form 3 ist eine trichterförmige Einfüllöffnung 5 eingearbeitet. Diese Einfüllöffnung 5 wird über der Ausnehmung 10 positioniert. Mittels eines hier lediglich schematisch gezeigten Einfüllstutzens 4 wird im Schmelzgussverfahren ein dünnflüssiger thermoplastischer Kunststoff eingepumpt. Der in die Ausnehmung 10 eingepumpte thermoplastische Kunststoff 6 härtet ohne chemische Reaktion aus und verbindet sich chemisch mit den Folien 8 und 9 sowie dem Kleber 28. Anschliessend wird die Form 3 entfernt. Wie die Fig. 3 zeigt, befindet sich die Oberfläche 29 des ausgehärteten Füllstoffes 6 in der Ebene der Oberfläche 12 der Folie 8. Wesentlich ist beim genannten Verfahren, dass der thermoplastische Kunststoff bei vergleichsweise tiefem Druck und tiefer Temperatur in den Hohlraum 10 eingepumpt wird. Die Temperatur liegt vorzugsweise unterhalb von 300° und beträgt vorzugsweise etwa 150 - 250°C. Der Druck liegt vorzugsweise im Bereich von etwa 5 - 10 bar.

Die Fig. 3 zeigt einen nach diesem Verfahren hergestellten Datenträger 1. Dieser weist wenigstens zwei Folien 8 und 9 auf, deren Oberflächen 12 und 13 planparallel zueinander sind. Die Abmessungen des Datenträgers 1 entsprechen vorzugsweise dem Standard der ISO Norm 7810. Der Kartenkörper 11 kann hier aber auch aus mehr als zwei Folien bestehen, die beispielsweise im Heisslaminierverfahren miteinander verbunden sind.

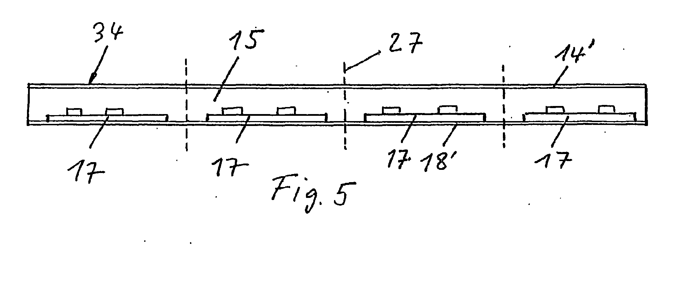

Die Fig. 4 zeigt einen Datenträger 2, der einen Kartenkörper 30 aufweist, der durch eine Deckfolie 14, eine Bodenfolie 18 sowie einen Füllstoff 15 gebildet ist. Der Füllstoff 15 bildet eine mittlere Schicht, in welche ein elektronisches Modul 17 eingebettet ist, das eine Leiterplatte 24 aufweist, auf der mehrere elektronische Bauteile 23 angeordnet sind. Diese Bauteile 23 können eine Antenne, eine Batterie, Kondensatoren usw. umfassen. Die Deckfolie 14 und die Bodenfolie 18 sind beispielsweise aus Polycarbonat oder PVC hergestellt. Der Datenträger 2 entspricht in den Abmessungen vorzugsweise ebenfalls der oben genannten ISO Norm. Die Oberflächen 25 und 26 sind planparallel zueinander. Die Schmalseiten 22 sind vorzugsweise durch die Deckfolie 14, die Bodenfolie 18 sowie durch den Füllstoff 15 gebildet. Die Stärke des Füllstoffs 15 richtet sich insbesondere nach der Höhe der Bauteile 23 und beträgt vorzugsweise weniger als 3mm. Die Herstellung des Datenträgers 2 wird nachfolgend anhand der Fig. 2 näher erläutert.

Zur Herstellung des Datenträgers 2 wird eine Form 19 verwendet, die aus zwei voneinander trennbaren Teilen 20 und 21 besteht und die einen Hohlraum 32 bildet. In diesen Hohlraum 2 werden die Deckfolie 14 und die Bodenfolie 18 im Abstand zueinander positioniert. Durch eine trichterförmige Einfüllöffnung auf der Bodenfolie 18 wird das elektronische Modul 17 positioniert. Die Bodenfolie 18 und das elektronische Modul 17 können fest miteinander verbunden sein. Grundsätzlich ist es auch möglich, das elektronische Modul 17 mit der Deckfolie 14 zu verbinden oder dieses im Abstand zur Bodenfolie 18 als auch im Abstand zur Deckfolie 14 anzuordnen. Die Form 19 wird nun geschlossen und über eine trichterförmige Eingussöffnung 33 wird mit einem hier lediglich angedeuteten Einfüllstutzen 16 ein flüssiger thermoplastischer Kunststoff in den Hohlraum 32 eingepumpt. Die elektronischen Bauteile 23 werden hierbei vom flüssigen Kunststoff umspült. Die Temperatur des flüssigen Kunststoffs beträgt beispielsweise etwa 200° und der Druck, mit dem der Kunststoff eingespritzt wird, beträgt beispielsweise 3 - 5 bar. Verglichen mit einem Spritzgussverfahren wird somit ein vergleichsweise niedriger Druck und eine vergleichsweise tiefe Temperatur angewendet. Die elektronischen Bauteile 23 werden somit schonend umspült. Nachdem der Hohlraum 32 vollständig mit dem thermoplastischen Kunststoff ausgefüllt ist, wird die Temperatur der Form 19 gesenkt und damit der Kunststoff ausgehärtet. Es bildet sich damit der Füllstoff 15, welcher chemisch fest mit den Bauteilen 23, der Leiterplatte 24 sowie der Deckfolie 14 fest verbunden ist. Die Leiterplatte 24 kann mit hier nicht gezeigten Durchbrüchen versehen sein, so dass der Füllstoff 15 nach dem Aushärten ebenfalls mit der Bodenfolie 18 fest verbunden ist. Die Leiterplatte 24 kann auch kleiner sein als in Fig. 2 und 4 gezeigt, so dass weitere Verbindungsstellen zwischen dem Füllstoff 15 und der Bodenfolie 18 bestehen.

Nach dem Aushärten, das beispielsweise 3 - 5 Sek. dauert, werden die Teile 20 und 21 voneinander getrennt und der Datenträger 2 entformt.

Das genannte Verfahren gemäss Fig. 2 ermöglicht auch die Herstellung des in Fig. 5 gezeigten Körpers 34, der zwei bogenförmige grosse Folien 14' und 18' aufweist. Zwischen diesen bogenförmigen Folien 14' und 18' sind mehrere elektronische Bauteile 17 in einem Füllstoff 15 eingebettet. Die Herstellung des Körpers 34 erfolgt wie oben an der Fig. 2 erläutert, der Hohlraum 32 ist hier jedoch so gross, dass er die bogenförmigen Folien 14' und 18'aufnehmen kann. Zur Bildung des Füllstoffes 15 wird vorzugsweise an mehreren Seiten flüssiger Kunststoff eingepumpt. Es sind hier in der entsprechenden Form 19 somit mehrere Einfüllöffnungen 33 und Einfüllstutzen 16 vorgesehen. Nach dem Aushärten werden die Datenträger 2 durch Ausstanzen oder fräsen hergestellt. In Fig. 5 sind die Stanzlinien mit gestrichelten Linien 27 angedeutet. Die Herstellung des Körpers 34 und das Ausstanzen kann jeweils in einem Arbeitsgang und damit sehr rationeil erfolgen. Grundsätzlich ist ein ähnliches Verfahren gem. Fig. 1 möglich. Bei diesen weist die Form 3 somit mehrere Einfüllöffnungen 5 auf und gleichzeitig werden mehrere Ausnehmungen 10 mit einem thermoplastischen Kunststoff gefüllt.

Als Kunststoff, mit welchem die Füllstoffe 6 und 15 gebildet wird, eignen sich insbesondere Kunststoffe, die ohne chemische Reaktion aushärten und die bei vergleichsweise tiefer Temperatur, beispielsweise unterhalb von 300° flüssig sind. Geeignete Kunststoffe sind an sich bekannt und werden unter der Bezeichnung Hotmelt angeboten.

## Patentansprüche

1. Verfahren zur Herstellung eines Datenträgers (1,2), der einen Kartenkörper (11) bestehend aus wenigstens einer Folie (8) und mit zwei zueinander planparallelen Oberflächen (12;13;25,26) und wenigstens ein in den Kartenkörper eingebettetes elektronisches Modul (7) aufweist, **dadurch gekennzeichnet, dass** das elektronische Modul (7) in eine oben offene Ausnehmung (10) der mit einer weiteren Folie (9) durch Laminieren verbundenen Folie (8) eingelegt wird und dass in diese oben offene Ausnehmung (10) mit einem Druck von 3 bis 10 bar ein dünnflüssiger thermoplastischer Kunststoff eingespritzt wird, wobei das elektronische Modul (7) umspült wird und nach dem Aushärten des thermoplastischen Kunststoffs in diesen eingebettet und mit dem aus den wenigstens zwei genannten Folien (8, 9) hergestellten Kartenkörper (8) fest verbunden ist.

2. Verfahren nach Anspruch 1, **dadurch gekennzeichnet, dass** der thermoplastische Kunststoff mit einem Druck von 3 bis 5 bar in den offenen Raum (10,32) eingespritzt wird.

3. Verfahren nach Anspruch 1 oder 2, **dadurch gekennzeichnet, dass** der thermoplastische Kunststoff durch eine trichterförmige Einfüllöffnung (5) in die oben offene Ausnehmung (10,32) eingespritzt wird.

4. Verfahren nach einem der Ansprüche 1 bis 3, **dadurch gekennzeichnet, dass** der thermoplastische Kunststoff im Schmelzgussverfahren eingebracht wird.

5. Verfahren nach einem der Ansprüche 1 bis 4, **dadurch gekennzeichnet, dass** der thermoplastische Kunststoff bei einer Temperatur von weniger als 300°C eingespritzt wird.

6. Verfahren nach einem der Ansprüche 1 bis 5, **dadurch gekennzeichnet, dass** der thermoplastische Kunststoff im Wesentlichen lösungsmittelfrei ist und ohne chemische Reaktion aushärtet.

7. Datenträger mit einem elektronischen Modul (7), das in einer oben offenen Ausnehmung (10) einer mit einer weiteren Folie (9) durch Laminieren verbundenen Folie (8) eines Kartenkörpers (11) angeordnet ist wobei diese oben offene Ausnehmung (10) mit einem Füllstoff (6) ausgefüllt ist, **dadurch gekennzeichnet, dass** der Füllstoff in einem Schmelzgussverfahren aus einem thermoplastischen Kunststoff hergestellt wurde, wobei das Modul (7) in den ausgehärteten thermoplastischen Kunststoff eingebettet und mit dem aus den wenigstens zwei genannten Folien (8, 9) hergestellten Kartenkörper (8) fest verbunden ist.

8. Datenträger nach Anspruch 7, **dadurch gekennzeichnet, dass** der Füllstoff (15) aus einem Schmelzklebstoff hergestellt ist.

9. Datenträger nach Anspruch 7, **dadurch gekennzeichnet, dass** die Folie (8) mit dem eingelegten elektronischen Modul (7) eine äussere Schicht bildet.

10. Datenträger nach Anspruch 9, **dadurch gekennzeichnet, dass** die beiden Folien (8,9) aus Polycarbonat hergestellt und durch ein Laminierverfahren miteinander verbunden sind.

## Claims

1. Method for producing a data carrier (1, 2), which has a card body (11) comprising at least one film (8) and having two surfaces (12; 13; 25, 26) that are plane-parallel to one another and at least one electronic module (7) embedded in the card body, **characterized in that** the electronic module (7) is placed into an upwardly open recess (10) of the film (8), which is joined to a further film (9) by lamination, and **in that** a low-viscosity thermoplastic material is injected into this upwardly open recess (10) at a pressure of 3 to 10 bar, the electronic module (7) being encapsulated and embedded in the thermoplastic material once the latter has cured, and permanently bonded to the card body (8) produced from the at least two said films (8, 9).

2. Method according to Claim 1, **characterized in that** the thermoplastic material is injected into the open space (10, 32) at a pressure of 3 to 5 bar.

3. Method according to Claim 1 or 2, **characterized in that** the thermoplastic material is injected into the upwardly open recess (10, 32) through a funnel-shaped filling opening (5).

4. Method according to one of Claims 1 to 3, **characterized in that** the thermoplastic material is introduced by the hotmelt moulding method.

5. Method according to one of Claims 1 to 4, **characterized in that** the thermoplastic material is injected at a temperature of less than 300°C.

6. Method according to one of Claims 1 to 5, **characterized in that** the thermoplastic material is substantially solvent-free and cures without any chemical reaction.

7. Data carrier comprising an electronic module (7), which is arranged in an upwardly open recess (10) of a film (8) of a card body (11) that is joined to a further film (9) by lamination, this upwardly open recess (10) being filled with a filler (6), **characterized in that** the filler has been produced from a thermoplastic material by a hotmelt moulding method, the module (7) being embedded in the cured thermoplastic material and permanently connected to the card body (8) produced from the at least two said films (8, 9).

8. Data carrier according to Claim 7, **characterized in that** the filler (15) is produced from a hotmelt adhesive.

9. Data carrier according to Claim 7, **characterized in that** the film (8) forms an outer layer with the placed-in electronic module (7).

10. Data carrier according to Claim 9, **characterized in that** the two films (8, 9) are produced from polycarbonate and joined to each other by a laminating method.

## Revendications

1. Procédé de fabrication d'un support de données (1, 2) qui présente un corps de carte (11) constitué d'au moins un film (8), de deux surfaces (12; 13; 25, 26) parallèles l'une à l'autre et d'au moins un module électronique (7) incorporé dans le corps de carte, **caractérisé en ce que** le module électronique (7) est inséré dans une découpe (10) ouverte dans le haut de la feuille (8) reliée par stratification à une autre feuille (9) et **en ce qu'**une matière synthétique thermoplastique fluide est injectée sous une pression de 3 à 10 bars dans cette découpe (10) ouverte dans le haut, le module électronique (7) étant englobé et incorporé dans la matière synthétique thermoplastique après durcissement de cette dernière et étant ainsi relié solidairement au corps de carte (8) constitué desdites au moins deux feuilles (8, 9).

2. Procédé selon la revendication 1, **caractérisé en ce que** la matière synthétique thermoplastique est injectée à une pression relativement basse de 3 à 5 bars dans l'espace ouvert (10, 32).

3. Procédé selon les revendications 1 ou 2, **caractérisé en ce que** la matière synthétique thermoplastique est injectée dans la découpe (10, 32) ouverte dans le haut par une ouverture de remplissage (5) en forme d'entonnoir.

4. Procédé selon l'une des revendications 1 à 3, **caractérisé en ce que** la matière synthétique thermoplastique est apportée par une opération de moulage à l'état fondu.

5. Procédé selon l'une des revendications 1 à 4, **caractérisé en ce que** la matière synthétique thermoplastique est injectée à une température non inférieure à 300 °C.

6. Procédé selon l'une des revendications 1 à 5, **caractérisé en ce que** la matière synthétique thermoplastique durcit essentiellement sans solvant et sans réaction chimique.

7. Support de données qui présente un module électronique (7) disposé dans une découpe (10) ouverte dans le haut d'une feuille (8), reliée par stratification à une autre feuille (9), d'un corps de carte (11), cette découpe (10) ouverte dans le haut étant remplie d'un matériau de remplissage (6), **caractérisé en ce que** le matériau de remplissage est préparé dans une opération de moulage à l'état fondu de matière synthétique thermoplastique, le module (7) étant incorporé dans la matière synthétique thermoplastique durcie et étant relié solidairement au corps de carte (8) constitué desdites au moins deux feuilles (8, 9).

8. Support de données selon la revendication 7, **caractérisé en ce que** le matériau de charge (15) est constitué d'un adhésif à l'état fondu.

9. Support de données selon la revendication 7, **caractérisé en ce qu'**avec le module électronique (7) qui y est inséré, la feuille (8) forme une couche extérieure.

10. Support de données selon la revendication 9, **caractérisé en ce que** les deux feuilles (8, 9) sont constituées de polycarbonate et sont reliées l'une à l'autre par une opération de stratification.
